# EUROPÄISCHE PATENTSCHRIFT

(11) **EP 2 020 014 B1**
(45) Veröffentlichungstag und Bekanntmachung des Hinweises auf die Patenterteilung: **02.11.2011**
(21) Anmeldenummer: 07710525.2
(22) Anmeldetag: 21.03.2007
(51) Int. Cl.: H01H 83/02, H02H 3/10, H02H 3/33

(54) **SCHALTEINRICHTUNG**
SWITCHING DEVICE
DISPOSITIF DE COMMUTATION

(30) Priorität: 20.04.2006 AT 6752006
(43) Veröffentlichungstag der Anmeldung: 04.02.2009
(73) Patentinhaber: Eaton GmbH, 3943 Schrems (AT)
(72) Erfinder: BARTONEK, Michael, 1080 Wien (AT); DOBUSCH, Gerhard, 1180 Wien (AT)
(74) Vertreter: Gibler, Ferdinand
(86) Internationale Anmeldenummer: PCT/AT2007/000136
(87) Internationale Veröffentlichungsnummer: WO 2007/121492

(56) Entgegenhaltungen:
- EP-A1- 0 570 603
- WO-A-2006/007608
- DE-A1- 19 842 470

## Beschreibung

Die Erfindung betrifft eine Schalteinrichtung, wie beispielsweise einen Fehlerstromschutzschalter oder Kombischalter, zum Unterbrechen und Schalten zumindest einer Leitung, mit einer netzspannungsunabhängigen Auslöseeinrichtung, mit einem dieser zugeordneten Auslöseelement, wie z.B. einem Auslöserelais, sowie mit einer netzspannungsabhängigen Auslöseeinrichtung.

Derartige Schalteinrichtungen finden in der Elektrotechnik insbesondere in Gebäudeinstallationen wie z.B. Haushaltsinstallationen Anwendung. Bei Auftreten eines unerwünschten Zustandes, wie beispielsweise eines Fehlerstroms, Überstroms oder einer Überspannung, sollen diese Schalteinrichtungen ansprechen und den betroffenen Stromkreis von der Spannungsversorgung trennen.

Fehlerstromschutzschalter (RCDs) oder Kombischalter (RCBOs) werden ihren technischen Funktionen nach als netzspannungsunabhängig ("VI" oder *voltage independent)* oder als netzspannungsabhängig ("VD" oder *voltage dependent*) klassifiziert. Dabei ist die volle Funktionsfähigkeit gemäß einschlägiger Produktnormen (z.B. EN/IEC 61008, 61009, 61947,..) im erstgenannten Fall auch bei ausgefallener Netzspannung gegeben (VI), im letzteren Fall hingegen nur bei Vorhandensein der speisenden Netzspannung (VD).

In der internationalen Veröffentlichungsschrift WO 2006/007 608 A2 wurde bereits ein FI-Schutzschalter offenbart, der zu seiner spannungsunabhängigen Grundfunktion ein optional einbaubares Zusatzmodul (Steuerungs- und Regelungsmodul) aufnehmen kann, das spannungsabhängige Zusatzfunktionen ermöglicht. Dazu sind in dem FI-Schutzschalter zwei Auslöseelement vorhanden, wovon das eine spannungsunabhängig (permanentmagnetischer Auslöser) und das andere spannungsabhängig (Arbeitstromauslöser) auf ein gemeinsames Schaltschloss wirken. Bei eingesetztem Zusatzmodul und angelegter Versorgungsspannung wird der spannungsunabhängige Auslöser überbrückt und nur der spannungsabhfingige Auslöser angesteuert.

Nachteilig an dieser Schalteinrichtung ist der hohe bauliche Aufwand, da für spannungsunabhängige und spannungsabhängige Auslösungen viele Baugruppen doppelt vorhanden sein müssen. Da für die beiden Arten der Auslösungen jeweils ein eigenes Auslöseelement vorhanden sein muss, gilt dies insbesondere für jene Umsetzungen, bei denen der nachträgliche Einbau eines Zusatzmoduls nicht vorgesehen ist.

Die DE 198 42 470 A1 beschreibt eine Fehlerstromschutzeinrichtung mit Überlastschutz, wobei ein netzspannungsunabhängiger Fehlerstromauslösekreis und ein netzspannungsabhängiger Überlastauslösekreis auf das selbe Auslöserelais wirken.

Die EP 570 603 A1 offenbart einen eigensicheren Differenzstromschutzschalter, wobei dieser eine netzspannungsabhängige Auswerteelektronik aufweist, welcher ein erstes Auslöserelais zugeordnet ist, welches bei einem Verlust der Versorgungsspannung der Auswerteelektronik das Schaltschloss auslösen würde. Um dies zu vermeiden, weist der Schalter weiters ein zweites Auslöserelais auf, welches ebenfalls auf das Schaltschloss wirkt, und ebenfalls bei einem Verlust der Versorgungsspannung das Schaltschloss auslösen würde. Um dies zu verhindern, ist das Schaltschloss derart ausgebildet, dass dieses nur auslöst, wenn es nur von einem der beiden Auslöserelais angesteuert wird.

Aus der WO 2006/007608 A geht ein netzspannungsunabhängiger Fehlerstromschutzschalter hervor, welcher durch Einsetzen eines netzspannungsabbängigen Zusatzmoduls um weitere Funktionalitäten erweitert wird.

Die Aufgabe der vorliegenden Erfindung besteht daher darin, eine Schalteinrichtung der oben genannten Art derart weiterzubilden, dass diese zwar weiterhin mit und ohne Zusatzmodul betrieben werden kann, dabei aber einen einfacheren Aufbau aufweist. Insbesondere sollen bei Betrieb der Schalteinrichtung ohne Zusatzmodul, wenn also lediglich die spannungsunabhängigen Grandfunktionen vorgesehen sind, keine Baugruppen vorhanden sein müssen, die für den reinen spannungsunabhängigen Betrieb nicht benötigt werden. Darüber hinaus sollen herkömmliche spannungsunabhängige Schalteinrichtungen leicht anpassbar sein sowie die Funkrtionszuverlässigkeit bei spannungsabhängigem Betrieb erhöht werden.

Diese Aufgabe wird erfingdungsgemäß dadurch gelöst, dass die netzspannungsabhängige Auslöseeinrichtung Mittel zur Auslösung des der netzspannungsunabhängigen Auslöseeinrichtung zugeordneten Auslöselements umfasst. Die netzspannungsabhängige Auslöseeinrichtung nutzt also das ohnehin vorhandene Auslöseelement der netzspannungsunabhängigen Auslöseeimichtung.

Dadurch ist es möglich das Schaltelement wahlweise mit oder ohne Zusatzmodul zu verwenden. Auch bei Verwendung des Zusatzmoduls und damit unter Nutzung der spannungsabhängigen erweiterten Funktionen kann so dennoch auf ein weiteres Auslöseelement verzichtet werden.

Gemäß einer vorteilhaften Ausführung kann ein Summeastromwandler mit zumindest einer Primärwicklung zur Detektion eines kritischen Stroms und mit einer Sekundärwicklung zur Beaufschlagung des netzspannungsunabhängigen Auslöseelements mit einem Auslösestrom vorgesehen sein. Damit können Fehlerströme erkannt werden und so die meist vorgeschriebene netzspannungsunabhängige Auslösefunktionalität gewährleistet werden.

In diesem Zusammenhang kann vorgesehen sein, dass der Summenstromwandler eine zusätzliche Tertiärwicklung umfasst. Damit können ungewollte Auslösungen insbesondere bei transienten Überspannungen und deren Folgeströmen vermieden werden.

Gemäß einer weiteren Ausführungsform der Erfindung kann die netzspannungsabhängige Auslöseeinrichtung zwischen Sekundärwicklung und Auslöseelement geschaltet sein- Hierbei kann insbesondere eine passive zwischen Sumruenstromwandler und Auslöserelais geschaltete Auslöseelektronik vorgesehen sein und gegebenenfalls mit der netzspannungsabhängigen Auslöseeinrichtung zu einer Baugruppe zusammengefasst, insbesondere in einem Modul kombiniert sein.

In diesem Zusammenhang kann vorgesehen sein, dass die netzspannungsabhängige Auslöseeinrichtung zur Einspeisung eines elektrischen Stroms in das Auslöseelement ausgebildet ist. Dies hat den Vorteil, dass die netzspannungsabhängige Auslöseeinrichtung direkt eine Auslösung des der netzspannungsunabhängigen Auslöseeinrichtung zugeordneten Auslöseelements bewirken kann.

In bevorzugter Ausgestaltung kann die netzspannungsabhängige Auslöseeinrichtung in Form eines zu einer Funktionsgruppe zusammengefassten Moduls ausgebildet sein. Dadurch ist es auf besonders einfache Weise möglich, verschiedene Ausführungen mit oder ohne netzspannungsabhängige Funktionen zu schaffen. Dabei kann gemäß einer Variante das Modul fest in der Schalteinrichtung angeordnet sein. Alternativ wäre es gemäß einer anderen Variante möglich, das Modul entfernbar auszuführen und, vorzugsweise über Steckkontakte, wieder an der Schaltcinrichtung anordenbar auszubilden. In der letzteren Ausftlhrungsform können netzspannungsabhängige Funktionen auch nachträglich noch nachgerüstet werden. Vorteilhafterweise kann die netzspannungsabhängige Auslöseeinrichtung bei Anliegen einer Versorgungsspannung in der zumindest einen Leitung aktiviert sein. Dies hat den Vorteil, dass ein Wechsel vom spannungsunabhängigen in den spannungsabhängigen Betrieb - beziehungsweise umgekehrt - automatisch erfolgen kann.

Bevorzugt kann vorgesehen sein, dass die netzspannungsabhängige Auslöseeinrichtung bei Überschreiten eines vorgebbaren Schwellwertes der Spannung in der zumindest einen Leitung, aktiviert ist. Damit wird erst in den spannungsabhangigen Betrieb gewechselt, wenn die volle Funktionsfähigkeit der netzspannungsabhängigen Auslöseeinrichtung garantiert ist.

Dabei kann der vorgebbare Schwellwert zwischen 30 und 100 V, vorzugsweise zwischen 50 und 80 V, betragen. Dadurch wird sichergestellt, dass bei Anliegen einer für den Menschen gefährlichen Berührungsspannung bereits die hohe Sicherheit der netzspannungsabhängigen Auslöseeinrichtung zur Verfügung steht.

Vorzugsweise kann die netzspannungsabhangige Auslöseeinrichtung bei Unterschreiten des vorgebbaren Schwellwertes der Spannung in der zumindest einen Leitung, deaktiviert sein. Dabei funktioniert die Schalteinrichtung wie eine reine netzspannungsunabhängige Schaltung, so dass jederzeit eine sichere Funktion der Schalteinrichtung gewährleistet ist.

In weiterer Ausgestaltung der Erfindung kann eine, vorzugsweise netzspannungsunabhängige, Verzögerungsschaltung vorgesehen sein, die die netzspannungsabhängige Auslöseeinrichtung während einer vorgebbaren Zeitspanne nach deren Aktivierung, vorzugsweise während 1 bis 100 msec, unwirksam macht. Damit kann insbesondere die Zeit, in welche die netzspannungsabhängige Auslöseeinrichtung beim Aktivieren bis zu ihrer vollen Funktionsfähigkeit benötigt, überbrückt werden. Damit können in dieser Zeitspanne zuverlässig Fehlauslösungen, welche durch eine noch nicht in vollem Funktionsumfang zur Verfügung stehende netzspannungsabhängige Auslöseeinheit bedingt sein könnten, vermieden werden.

In diesem Zusammenhang kann vorgeschen sein, dass die Verzögerungsschaltung die netzspannungsabhängige Auslöseeinrichtung während der vorgebbaren Zeitspanne überbrückt. Die netzspannungsabhängige Auslöseeinrichtung kann damit auf besonders einfache Weise unwirksam gemacht werden. '

Die Erfindung wird unter Bezugnahme auf die beigeschlossenen Zeichnungen, in welchen Ausführungsfbrmen beispielhaft dargestellt sind, näher beschrieben. Dabei zeigt:
Fig. 1 einen Fehlerstromschutzschalter mit einer Tertiärwicklung gemäß dem vorbekannten Stand der Technik,
Fig. 2 ein Ausführungsbeispiel eines Fehleistromschutzschalters, welcher nicht sämtliche Merkmale des Patentanspruches 1 aufweist, und das Verständnis der Erfindung erleichtert,
Fig. 3 einen Fehlerstromschutzschalter mit einer leistungsverstärkenden passiven Beschaltung gemäß dem vorbekannten Stand der Technik,
Fig. 4 eine Ausführungsform eines erfindungsgemäßen Fehlerstromschutzschalters,
Fig. 5a ein Detail eines Zusatzmoduls mit integrierter netzspannungsunabhängiger Elektronik gemäß des ersten Ausführungs beispiels
Fig. 5b ein Detail eines Zusatzmoduls mit integrierter netzspannungsunabhängiger Elektronik gemäß der Ausführungsform der Erfindung,
Fig. 5c ein Detail eines Zusatzmoduls mit separater netzspannungsunabhängiger Elektronik gemäß des ersten Ausführungs beispiels,
Fig. 5d ein Detail eines Zusatzmoduls mit separater netzspannungsunabhängiger Elektronik gemäß der Auführungsform der Erfindung.

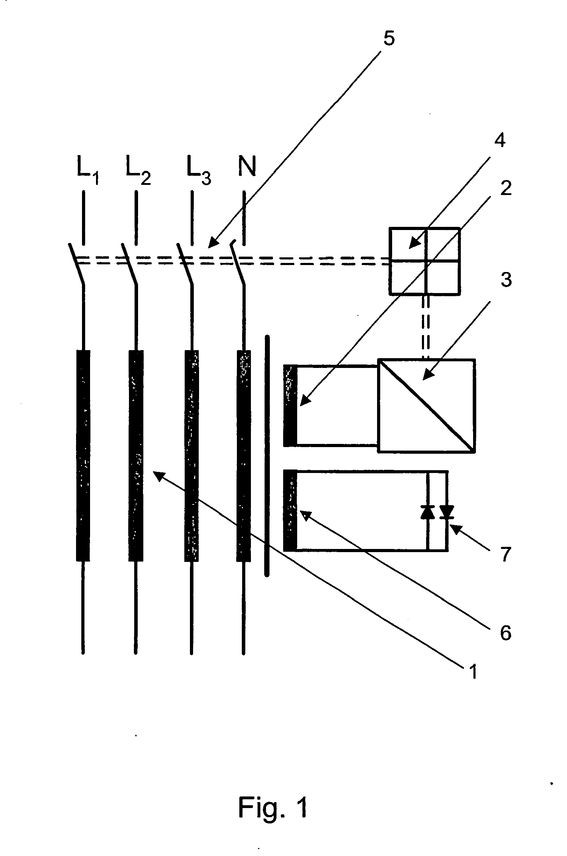

Figur 1 zeigt einen bekannten Fehlerstromschutzschalter mit vier Leitungen, nämlich den Außenleitern L₁, L₂, L₃ sowie dem Neutralleiter N, einem Summenstromwandler 1, einer Sekundärwicklung 2, einer Tertiärwicklung 6 sowie einem als permanentmagnetisches Auslöserelais 3 ausgeführten Auslöseelement. Das Auslöserelais 3 steht mit einem Schaltschloss 4 in Verbindung, welches wiederum auf die Hauptkontakte 5 wirkt Bei Auftreten eines Fehlerstroms in einer der Leitungen L₁, L₂, L₃ oder N wird in der Sekundärwicklung 2 eine Spannung induziert, wodurch das an diese angeschlossene permanentmagnetische Auslöserelais 3 anspricht und über das Schaltschloss 4 zum Auslösen des Schutzschalters und damit zu einem Trennen der Hauptkontakte 5 führt.

Spannungsunabhängige Schaltelemente wie dieser FI-Schalter beziehen ihre Auslöseenergie über den Summenstromwandler 1 direkt aus der Energie des Fehlerstromes. Aufgrund der hohen Empfindlichkeit solcher Auslösekreise besteht immer die Möglichkeit von ungewollten Auslösungen, z.B. beim Auftreten von transienten Überspannungen und deren Folgeströmen. Diesen unerwünschten Phänomenen wird beispielsweise mit einer speziellen zusätzlichen Bewicklung wie der in der Figur 1 dargestellten Tertiärwicklung 6 des Summenstromwandlers 1 begegnet, die über zwei antiparallel geschaltete Dioden 7 bei hohen Fehlerstromamplituden magnetische Feldenergie aus dem Summenstromwandler 1 in diese Zusatzwicklung 6 überträgt. Dadurch wird der Energieübertrag an das sekundärseitig angekoppelte Auslöseelement - in dem gezeigten Fall an das permanentmagnetische Auslöserelais 3 - verringert, so dass dieses nicht anspricht.

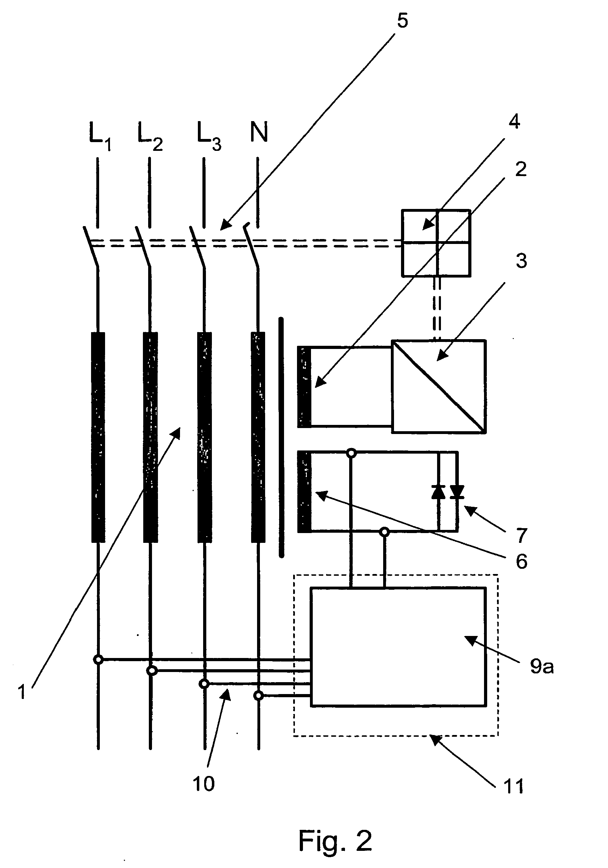

In der Ausführung, wie in Figur 2 dargestellt, welche nicht sämtliche Merkmale des Patentanspruches 1 aufweist, und das Verständnis der Erfindung erleichtert, wird diese Tertiärwicklung 6 zur Anbindung eines Zusatzmoduls 9a zur netzspannungsabhangigen Auslösung herangezogen. Dieses Prinzip des gesteuerten Magnetflusses im Summenstromwandler 1 wird verwendet, um durch hochohmigen beziehungsweise niederohmigen Abschluss der Tertiärwicklung 6 die Auslösesteuerung für den spannungsunabhängigen beziehungsweise spannungsabhängigen Anwendungsfall zu realisieren. Dabei ist nur ein Auslöserelais, nämlich das permanentrftagnetische Auslöserelais 3 nötig. Im spannungsunabhängigen Betrieb (VI) ist der Moduleingang am Modul 9a hochohmig, so dass das Modul 9a die VI-Auslösekreise nicht beeinflusst. Bei Vorhandensein einer Mindestspannung am Modul 9a wird der oben genannte Eingang niederohmig. Ein vorhandener Differenzstrom induziert in der Tertiärwicklung 6 einen Strom, der im Modul 9a aufbereitet (AD-Wandler) und erfasst wird. Bei Überschreiten eines vorkonfigurierbaren Schwellenwertes wird im Modul 9a ein Teststrom generiert und in die Tertiärwicklung 6 eingespeist. Aufgrund von hohen Werten der tertiären Windungszahl (beispielsweise zwischen 20 und 200, bevorzugt 50 bis 120, insbesondere 80) wird im Summenstromwandler 1 durch diese erhöhte Ampere-Windungszahl eine gesteigerte magnetische Durchflutung induziert, die über die Sekundärwicklung 2 das Permanentmagnet-Relais 3 im Sekundärkreis aktiviert. Gegenüber der netzspannungsunabhängigen Verwendung erfolgt die Ansteuerung des Permanentmagnet-Relais 3 mit erhöhter Energie - im Grenzfall bis Sättigung des Summenstromwandlermaterials eingetreten ist -, die eine Verbesserung der Auslösezuverlässigkeit des Relais 3 ermöglicht.

Durch das Einspeisen der Testspannung in die Tertiärwicklung 6 kann also das Permanentmagneirelais 3 durch eine netzspannungsabhängige Auslöseeinrichtung 9 angesteuert und so eine Auslösung des FI-Schalters herbeigeführt werden, ohne dass dazu ein eigenes netzspamungsabhängiges Auslöseelement nötig wäre.

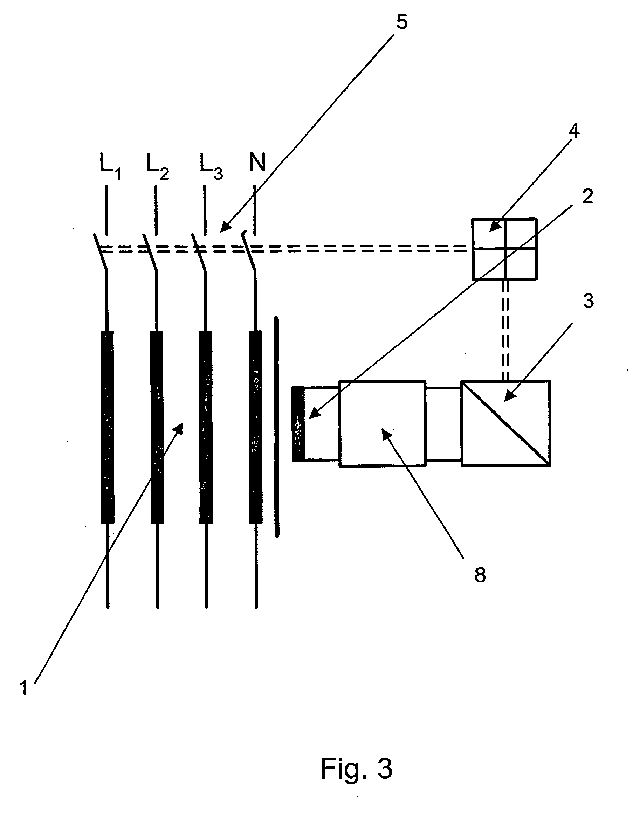

Neben dem in Figur 1 dargestellten FI-Schutzschaiter sind auch vorbekannte Auslösekreise wie in Figur 3 gezeigt in Gebrauch. Dabei wird zwischen Summenstromwandler 1 und Auslöserelais 3 eine passive Auslöseelektronik 8 geschaltet, um eine zuverlässige Auslösung zu erreichen beziehungsweise eine gezielte Verzögerung derselben einhalten zu können. Letzteres gilt beispielsweise für die in der Norm definierte Charakteristik "S". Als netzspannungsunabhängiges Auslöseelement dient hier ebenfalls ein permanentmagnetisches Auslöserelais 3, welches das Schaltschloss 4 betätigen kann.

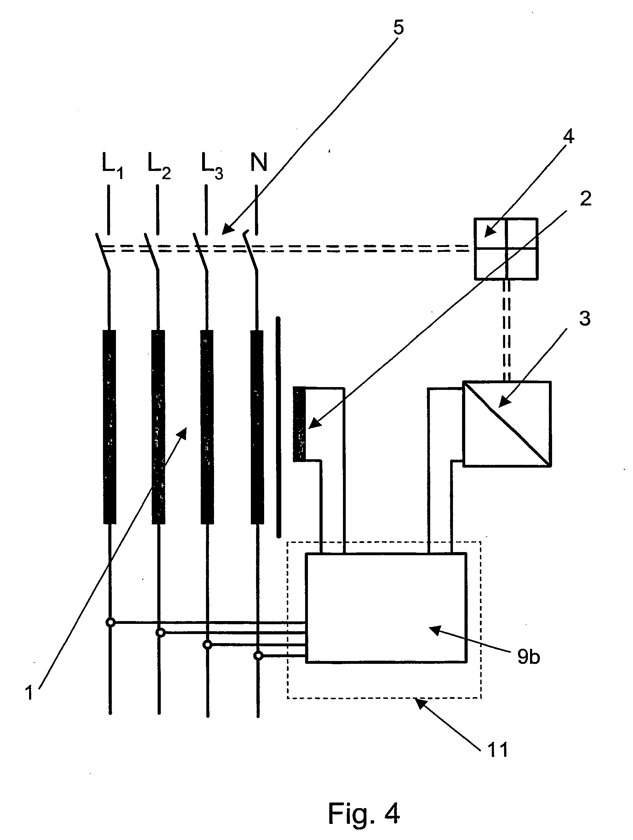

Auch hier ist es erfindungsgemäß vorgesehen, eine netzspannungsabhängige Auslöseeinrichtung anzuordnen und diese so auszubilden, dass sie das der netzspannungsunabhängigen Auslöseeinrichtung zugeordnete Auslöseelement, also das Permanentmagnetrelais 3 auslösen kann. Da hier unter Umständen aber keine Tertiärwicklung vorhanden ist, ist gemäß einer Ausführungsform der Erfindung vorgesehen, die Anbindung der netzspannungsabhängigen Funktionen über ein Modulteil 9b zu realisieren, welches die passive Auslöseelektronik 8 integrieren kann (siehe Figur 4). Dabei kann das Modul 9b direkt auf das Permanentmagnetrelais 3 einwirken und über dieses eine Auslösung des FI-Schalters herbeiführen.

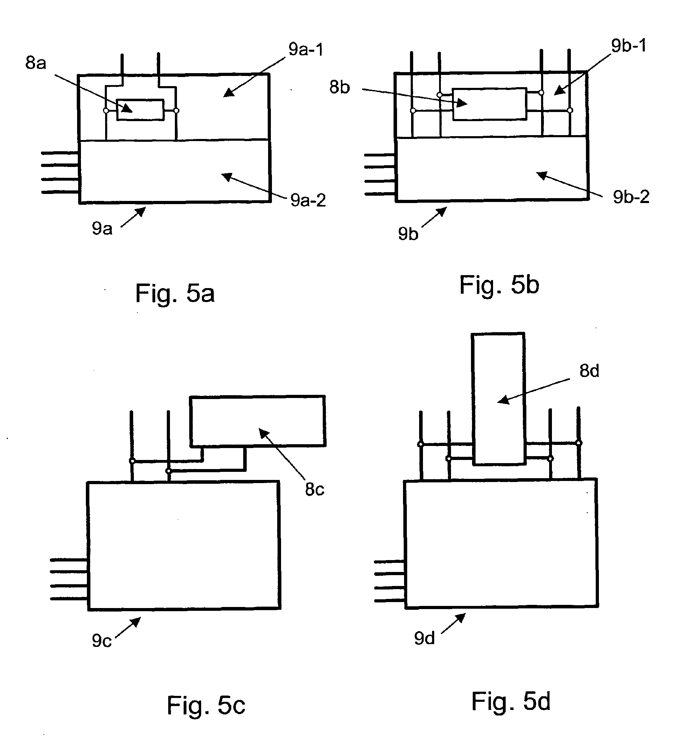

Es kann vorgesehen sein, dass die netzspannungsabhängigen Zusatzfunktionen in einem wahlweise anordenbaren beziehungsweise wieder entfernbaren Zusatzmodul zusammengefasst sind. Ohne dieses Zusatzmodul 11 funktioniert der FI-Schalter dann wie ein herkömmlicher, rein spannungsunabhängig anfgebauter Schalter. Wird in diesen das Zusatzmodul 11 eingesetzt, wird er um netzspannungsabhängige Zusatzfunktionen der Baugruppe 9a (Figur 2) beziehungsweise 9b (Figur 4) ergänzt. Um die spannungsunabhängige Funktion auch bei eingesetztem Zusatzmodul 11 sicherzustellen, kann gemäß einer vorteilhaften Variante beispielsweise die netzspannungsunabhangige VI-Auslöscelektronik funktionell in diesem Modul 11 integriert werden (siehe auch beispielsweise Figur 5b, Detail 8b), so dass in diesem Fall das Modul 11 sowohl netzspannungsunabhängige (VI) als auch netzspannungsabhängige (VD) Funktionalitäten enthalten kann.

Die beiden Funktionsgruppen für eine netzspannungsabhängige (VD) und für eine netzspannungsunabhängige (VI) Auslösung können in zwei Modulteilen räumlich abgegrenzt angeordnet sein. Dabei werden die netxzpannungsunabhängigen (VI) Funktionen in einem Modulteil 9a-1 beziehungsweise 9b-1 und die netzspannungsabhängigen (VD) Funktionen in einem Modulteil 9a-2 beziehungsweise 9b-2 zusammengefasst.

Im Folgenden wird die netzspannungsabhängige Auslösefunktion des in Figur 4 gezeigten Ausführungsbeispiels erläutert: Das vom Summenstromwandler 1 generierte Fehlerstromsignal wird von der Elektronik 9b im Modul 11 aufbereitet und erfasst. Bei Überschreiten eines vorkonfigurierbaren Schwellenwertes wird im Modul 11 ein Teststrom generiert und an das Auslöserelais 3 ausgegeben. Dieses am Ausgang des Moduls 11 auftretende Signal ist leistungsstärker als das im VI-Betrieb von der Auslöseelektronik 8b oder 8d bereitgestellte Auslösesignal. Dadurch erhöht sich im VD-Betrieb die Auslösezuverlässigkeit des induktiv angekoppelten Auslöserelais 3.

Der Wert der minimalen Versorgungsspannung zur Aktivierung der VD-Funktionen in einem solchen Hybridmodul ("VIVD") liegt im Bereich von 30 - 100 V, vorzugsweise zwischen 50 und 80 V.

Zusätzlich können noch weitere Funktionen in das Schaltgerät beziehungsweise in das Modul 11 integriert werden. Beispielsweise kann eine interne Temperaturerfassung das Erfassen einer Temperaturüberschreitung ermöglichen, die hinsichtlich der Bewertung der thermischen Zuverlässigkeit der verwendeten elektronischen Bauteile im Modul 11 weiterverarbeitet werden kann. Beispielsweise kann das Gerät bei Temperaturüberlastung abgeschaltet werden. Insbesondere können durch Austauschen verschiedener Modultypen unterschiedliche Schutzanforderungen erfüllt werden, während die spannungsunabhängige Grundfunktion durch den selben Basisschalter bereitgestellt wird,

Gemeinsam ist dabei allen Modul-Typen die Möglichkeit der Realisierung zusätzlicher Funktionen im VD-Modus:
- Einstellbarkeit eines Schwellenwertes des Auslösefehlerstromes (z.B. ID zwischen 0,5 IDn und etwa 0,95 IDn),
- Einstellbarkeit einer Auslöseverzögerung,
- Einstellbarkeit einer Ober- und/odex Unterspannungsgrenze zur Detektion von Über- und/oder Unterspannungen,
- Bestimmung des Leistungsfaktors des Fehlerstromes,
- Kommunikationskanal nach außen über Infrarot, sichtbare LEDs, Funk,
- Dateninterface zum Austausch von Programmcodes, Parametern,

In einer Weiterbildung der Erfindung kann die Funktionssicherheit des Schaltgeräts noch weiter verbessert werden. Da ab Einschalten des Schaltgerätes bis zur Bereitstellung des vollen Funktionsumfanges des Moduls 11 eine endliche Zeit erforderlich ist - wenn auch nur im Bereich von msec -, ist es denkbar, dass mit dem Auftreten von transienten Stoßströmen eine ungewollte Auslösung des FI-Schutzschalters verbunden ist. Solche transiente Stoßströme können etwa durch das Einschalten induktiver Lasten auftreten. Es ist daher erwünscht, derart begründete ungewollte Auslösungen während dieser Zeitspanne zu verhindern. Bei einem erfindungsgemäßen Schaltgerät kann daher vorgesehen sein, die Funktionalität des Moduls 11 durch eine Verzögerungsschaltung zu überbrücken, bis das Modul 11 gemäß dessen Konfiguration solche unerwünschten Auslösungen verhindern kann. Dabei kann eine solche netzspannungsunabhängige Verzögerungsschaltung entweder in das Modul 11 integriert (siehe Abb. 5a und 5b) oder als separate, mit dem Modul 11 verbundene. Schaltung (siehe Abb. 5c und 5d) realisiert sein.

Die Überbrückung kann beispielsweise auf folgende Weise realisiert werden: In dem Ausführungsbeispiel gemäß den Figuren 4 und 5b ist im netzspannungsunabhängigen VI-Betrieb der Eingang des Modulteils 9b hochohmig, so dass die Funktion der Elektronik 8 aktiv ist. Bei Überschreiten eines Schwellenwertes der Vcrsorgungsspannung geht die netzspannungsunabhängige VI-Funktion in die netzspannungsabhängige VD-Funktion über. Dabei wird der Eingang des netzspannungsabhängigen Modulteiles 9b niederohmig und somit die Auslöseelektronik 9b überbrückt.

Eine Ausführung der Überbrückung in dem Beispiel gemäß den Figuren 2 und 5a ist in entsprechender Weise möglich.

Ist ein Auslösekreis vorgesehen, der eine leistungsverstärkende, passive Beschaltung erfordert (wie in Figur 3 mit Detail 8 dargestellt), kann diese auch mit der zusätzlichen Verzögerungsschaltung kombiniert werden (siehe Figuren 5b und 5d, Details 8b und 8d).

## Patentansprüche

1. Schalteinrichtung, wie beispielsweise Fehlcrstromschutzschalter oder Kombischalter, zum Unterbrechen und Schalten zumindest einer Leitung (L₁, L₂, L₃, N), mit einer netzspannungsunabhängigen Auslöseeinrichtung (2), mit einem dieser zugeordneten Auslöseelement (3), wie z.B. einem Auslöseielais, sowie mit einer netzspannungsabhängigen Auslöseeinrichtung (9), wobei die netzspanntingsabhengige Auslöseeinrichtung (9) Mittel zur Auslösung des der netzspannungsunabhängigen Auslöseeinrichtung (2) zugeordneten Auslöselements (3) umfasst, wobei die netzspannungsunabhängige Auslöseeinrichtung (2) eine netzspannungsunabhängige Auslöseelektronik (8b) umfasst, und wobei die netzspannungsabhängige Auslöseeinrichtung (9) eine netzspannungsabhängige Elektronik (9b) umfasst, **dadurch gekennzeichnet, dass** ein von der netzspannungsabhängigen Elektronik (9b) an das Auslöseelement (3) ausgegebenes Auslösesignal leistungsstärker ist, als ein von der netzspannungsunabhängigen Auslöseclektronik (8b) bereitgestelltes Auslösesignal.

2. Schalteinrichtung nach Anspruch 1, **dadurch gekennzeichnet, dass** ein Summenstromwandler (1) mit zumindest einer Primärwicklung zur Detektion eines kritischen Stroms und mit einer Sekundärwicklung (2) zur Beaufschlagung des netzspannungsunabhängigen Auslöseelement (3) mit einem Auslösestrom vorgesehen ist.

3. Schalteinrichtung nach Anspruch 2, **dadurch gekennzeichnet, dass** der Summenstromwandler (1) eine zusätzliche Tertiärwicklung (6) umfasst.

4. Schalteinrichtung nach Anspruch 2, **dadurch gekennzeichnet, dass** die netzspannungsabhängige Auslöseeinrichtung (9) zwischen Sekundärwicklung (2) und Auslöseelement (3) geschaltet ist.

5. Schalteinrichtung nach Anspruch 4, **dadurch gekennzeichnet, dass** die netzspannungsabhängige Auslöseeinrichtung (9) zur Einspeisung eines elektrischen Stroms in das Auslöseelement (3) ausgebildet ist.

6. Schalteinrichtung nach einem der vorhergehenden Ansprüche, **dadurch gekennzeichnet, dass** die netzspannungsabhängige Auslöseeinrichtung (9) in Form eines zu einer Funktionsgruppe zusammengefassten Moduls (9) ausgebildet ist.

7. Schalteinrichtung nach einem der vorhergehenden Ansprüche, **dadurch gekennzeichnet, dass** die netzspannungsabhängige Auslöseeinrichtung (9) bei Anliegen einer Versorgungsspannung in der zumindest einen Leitung (L₁, L₂, L₃, N) aktiviert ist.

8. Schalteinrichtung nach einem der Ansprüche 1 bis 6, **dadurch gekennzeichnet, dass** die netzspannungsabhängige Auslöseeinrichtung (9) bei Überschreiten eines vorgebbaren Schwellwertes der Spannung in der zumindest einen Leitung (L₁, L₂, L₃, N), aktiviert ist.

9. Schalteinrichtung nach Anspruch 8, **dadurch gekennzeichnet, dass** der vorgebbare Schwellwert zwischen 30 und 100 V, vorzugsweise zwischen 50 und 80 V, beträgt.

10. Schalteinrichtung nach Anspruch 8 oder 9, **dadurch gekennzeichnet, dass** die netzspannungsabhängige Auslöseeinrichtung (9) bei Unterschreiten des vorgebbaren Schwellwertes der Spannung in der zumindest einen Leitung (L₁, L₂, L₃, N), deaktiviert ist.

11. Schalteinrichtung nach einem der Ansprüche 7 bis 10, **dadurch gekenntzeichnet, dass** eine, vorzugsweise netzspannungsunabhängige, Verzögerungsschaltung (8a, 8b, 8c, 8d) vorgesehen ist, die die netzspannungsabhängige Auslöseeinrichtung (9) während einer vorgebbaren Zeitspanne nach deren Aktivierung, vorzugsweise während 1 bis 100 msec, unwirksam macht.

12. Schalteinrichtung nach Anspruch 11, **dadurch gekennzeichnet, dass** die Verzögerungsschaltung (8a, 8b, 8c, 8d) die netzspannungsabhängige Auslöseeinrichtung (9) während der vorgebbaren Zeitspanne überbrückt.

13. Schalteinrichtung nach einem der vorhergehenden Ansprüche, **dadurch gekennzeichnet, dass** die netzspannungsabhängige Auslöseeinrichtung (9) zur Anpassung eines Schwellenwerts eines Auslösefehlerstroms in einem vorgebbaren Bereich ausgebildet ist.

## Claims

1. A switching device such as a residual-current breaker or a combination switch for example, for interrupting and switching at least one line (L₁, L₂, L₃, N), comprising a tripping device (2) which is independent of the system voltage, a tripping element (3) associated with said tripping device such as a tripping relay for example, and a tripping device (9) which is dependent on the system voltage, with the tripping device (9) which is dependent of system voltage comprising means for tripping the tripping element (3) associated with the tripping device (2) which is independent of system voltage, with the tripping device (2) which is independent of system voltage comprising an electronic tripping system (8b) which is independent of system voltage, and with the tripping device (9) which is dependent of system voltage comprising an electronic system (9b) which is dependent of system voltage, **characterized in that** a tripping signal output by the system voltage dependent electronic system (9b) to the tripping element (3) is more powerful than a tripping signal provided by the electronic tripping system (8b) which is independent of system voltage.

2. A switching device according to claim 1, **characterized in that** a summation current transformer (1) is provided comprising at least one primary winding for detecting a critical current and a secondary winding (2) for supplying a tripping current to the tripping device (3) which is independent of the system voltage.

3. A switching device according to claim 2, **characterized in that** the summation current transformer (1) comprises an additional tertiary winding (6).

4. A switching device according to claim 2, **characterized in that** the tripping device (9) which is dependent of the system voltage is switched between secondary winding (2) and the tripping element (3).

5. A switching device according to claim 4, **characterized in that** the tripping device (9) which is dependent of the system voltage is arranged for supplying an electric current to the tripping element (3).

6. A switching device according to one of the preceding claims, **characterized in that** the tripping device (9) which is dependent of the system voltage can be arranged in the form of a module (9) combined into a functional group.

7. A switching device according to one of the preceding claims, **characterized in that** the tripping device (9) which is dependent of the system voltage is activated in the case of application of a supply voltage in the at least one line (L₁ L₂, L₃ N).

8. A switching device according to one of the claims 1 to 6, **characterized in that** the tripping device (9) which is dependent of the system voltage is activated upon exceeding a predeterminable threshold value of the voltage in the at least one line (L₁, L₂, L₃, N).

9. A switching device according to claim 8, **characterized in that** the predeterminable threshold value is between 30 and 100 V, preferably between 50 and 80 V.

10. A switching device according to claim 8 or 9, **characterized in that** the tripping device (9) which is dependent of the system voltage is deactivated upon falling below the predeterminable threshold value of the voltage in the at least one line (L₁, L₂, L₃, N).

11. A switching device according to one of the claims 7 to 10, **characterized in that** a time-delay circuit (8a, 8b, 8c, 8d) is provided which is preferably independent of system voltage and which renders ineffective the tripping device (9) which is dependent of the system voltage during a predeterminable time interval after its activation, preferably during 1 to 100 msecs.

12. A switching device according to claim 11, **characterized in that** the time-delay circuit (8a, 8b, 8c, 8d) bridges the tripping device (9) which is dependent of the system voltage during the predeterminable time interval.

13. A switching device according to one of the preceding claims, **characterized in that** the tripping device (9) which is dependent of system voltage is arranged for adjusting a threshold value of a residual operating current in a predetermined range.

## Revendications

1. Dispositif de commutation, par exemple disjoncteur à courant de fuite ou disjoncteur combiné, pour couper et commuter au moins une ligne (L₁, L₂, L₃, N) avec un dispositif de déclenchement indépendant de la tension du réseau (2), avec un élément déclencheur (3) associé à celui-ci, par exemple un relais de déclenchement, ainsi qu'avec un dispositif de déclenchement dépendant de la tension du réseau (9), le dispositif de déclenchement dépendant de la tension (9) du réseau comprenant des moyens pour déclencher l'élément déclencheur (3) associé au dispositif de déclenchement indépendant de la tension du réseau (2), le dispositif de déclenchement indépendant de la tension du réseau (2) comprenant une électronique de déclenchement indépendante de la tension du réseau (8b), et le dispositif de déclenchement dépendant de la tension (9) du réseau comprenant une électronique de déclenchement dépendante de la tension du réseau (9b), **caractérisé en ce qu'**un signal de déclenchement émis par l'électronique de déclenchement dépendante de la tension du réseau (9b) vers l'élément déclencheur (3) est plus puissant qu'un signal de déclenchement fourni par l'électronique de déclenchement indépendante de la tension du réseau (8b).

2. Dispositif de commutation selon la revendication 1, **caractérisé en ce qu'**il est prévu un convertisseur sommateur de courant (1) avec au moins un enroulement secondaire pour la détection d'un courant critique et avec un enroulement secondaire (2) pour appliquer un courant de déclenchement à l'élément déclencheur indépendant de la tension du réseau (3).

3. Dispositif de commutation selon la revendication 2, **caractérisé en ce que** le convertisseur de courant total (1) comprend un enroulement tertiaire (6) supplémentaire.

4. Dispositif de commutation selon la revendication 2, **caractérisé en ce que** le dispositif de déclenchement dépendant de la tension du réseau (9) est monté entre l'enroulement secondaire (2) et l'élément déclencheur (3).

5. Dispositif de commutation selon la revendication 4, **caractérisé en ce que** le dispositif de déclenchement dépendant de la tension du réseau (9) est conçu pour fournir un courant électrique à l'élément déclencheur (3).

6. Dispositif de commutation selon l'une des revendications précédentes, **caractérisé en ce que** le dispositif de déclenchement dépendant de la tension du réseau (9) est conçu sous la forme d'un module (9) réuni dans un groupe fonctionnel.

7. Dispositif de commutation selon l'une des revendications précédentes, **caractérisé en ce que** le dispositif de déclenchement dépendant de la tension du réseau (9) est activé en présence d'une tension d'alimentation dans l'au moins une ligne (L₁, L₂, L₃, N).

8. Dispositif de commutation selon l'une des revendications 1 à 6, **caractérisé en ce que** le dispositif de déclenchement dépendant de la tension du réseau (9) est activé en cas de dépassement d'une valeur de seuil prédéterminable de la tension dans l'au moins une ligne (L₁, L₂, L₃, N).

9. Dispositif de commutation selon la revendication 8, **caractérisé en ce que** la valeur de seuil prédéterminable est comprise entre 30 et 100 V, de préférence entre 50 et 80 V.

10. Dispositif de commutation selon la revendication 8 ou 9, **caractérisé en ce que** le dispositif de déclenchement dépendant de la tension du réseau (9) est désactivé lorsque la tension dans l'au moins une ligne (L₁, L₂, L₃, N) passe en dessous de la valeur de seuil prédéterminable.

11. Dispositif de commutation selon l'une des revendications 7 à 10, **caractérisé en ce qu'**il est prévu un circuit de temporisation (8a, 8b, 8c, 8d), de préférence indépendant de la tension du réseau, qui rend le dispositif de déclenchement dépendant de la tension du réseau (9) inactif pendant un intervalle de temps prédéterminable après son activation, de préférence pendant 1 à 100 ms.

12. Dispositif de commutation selon la revendication 11, **caractérisé en ce que** le circuit de temporisation (8a, 8b, 8c, 8d) shunte le dispositif de déclenchement dépendant de la tension du réseau (9) pendant l'intervalle de temps prédéterminable.

13. Dispositif de commutation selon l'une des revendications précédentes, **caractérisé en ce que** le dispositif de déclenchement dépendant de la tension du réseau (9) est conçu pour l'adaptation d'une valeur de seuil d'un courant de fuite de déclenchement dans une plage prédéterminable.
